# EUROPÄISCHE PATENTSCHRIFT

(11) **EP 0 810 119 B1**
(45) Veröffentlichungstag und Bekanntmachung des Hinweises auf die Patenterteilung: **06.02.2002**
(21) Anmeldenummer: 97107897.7
(22) Anmeldetag: 15.05.1997
(51) Int. Cl.: B60Q 3/04, G02F 1/13

(54) **Anzeigeeinrichtung für Kraftfahrzeuge**
Display device for vehicle
Dispositif indicateur pour véhicule

(30) Priorität: 31.05.1996 DE 19621919
(43) Veröffentlichungstag der Anmeldung: 03.12.1997
(73) Patentinhaber: Hella KG Hueck & Co., 59552 Lippstadt (DE)
(72) Erfinder: Bergmann, Manfred, 33100 Paderborn (DE); Klassen, Eugen, 59556 Lippstadt (DE); Kleineaschoff, Gerhard, 59329 Wadersloh (DE)

(56) Entgegenhaltungen:
- EP-A- 0 140 350
- EP-A- 0 167 368
- US-A- 4 650 267
- US-A- 5 339 178
- US-A- 5 450 221

## Beschreibung

Die Erfindung betrifft eine Anzeigeeinrichtung für Kraftfahrzeuge nach dem Oberbegriff des Patentanspruchs 1.

Aus der DE 39 21 304 C2 ist eine Anzeigeeinrichtung mit einem LC-Display bekannt, dem zur rückwärtigen Beleuchtung mindestens zwei Lichtquellen zugeordnet sind. Den Lichtquellen sind jeweils ein Reflektor zugeordnet, so daß das von den Lichtquellen ausgestrahlte Licht annähernd gleichmäßig das LC-Display rückwärtig beleuchtet. Bei der bekannten Anzeigeeinrichtung ist zur Befestigung des Reflektors an dem LC-Display ein auf das LC-Display aufgesetztes rahmenartiges Verbindungselement erforderlich. Weiterhin ist ein Abstandshalter erforderlich, der einen vorgegebenen Abstand zwischen dem LC-Display und einer Leiterplatte gewährleistet. Durch die Anordnung der Lichtquellen und des Reflektors auf einer dem LC-Display abgewandten Seite der Leiterplatte ist eine Ausnehmung in der Leiterplatte erforderlich. Es steht relativ wenig Raum für die Bestückung der Leiterplatte mit elektronischen Bauelementen zur Verfügung. Durch die Ausbildung des Reflektors als Facetten-Reflektor erfordert die Anzeigeeinrichtung einen relativ großen Bauraum.

Aus der DE 92 04 334.8 U1 ist eine Anzeigeeinrichtung bekannt, die korrespondierend zu einer seitlich angeordneten Reihe von Lichtquellen einen bogenförmigen Reflektor aufweist. Diese Anordnung ermöglicht zwar eine Reduzierung der Einbautiefe der Anzeigeeinrichtung. Bei dieser bekannten Anzeigeeinrichtung ist jedoch keine Leiterplatte in der Anzeigeeinrichtung integriert.

Aus der US 5 450 221 A ist eine Anzeigeeinrichtung für Kraftfahrzeuge mit einem LC-Display bekannt, bei dem Lichtquellen in einem Gehäuse angeordnet sind, dessen Öffnung durch ein LC-Display abgedeckt ist. Die Lichtquellen dienen zur Hintergrundbeleuchtung des LC-Displays. Den Lichtquellen sind jeweils Reflektoren zugeordnet, die das Licht in Richtung des LC-Displays umleiten. Das Gehäuse selbst dient als Träger für elektronische Bauteile. Die bekannte. Anzeigeeinrichtung ist damit relativ voluminös aufgebaut.

Aus der US 5 339 178 A, die zur Bildung des Gattungsbegriffs herangezogen wurde, ist eine Anzeigeeinrichtung für Kraftfahrzeuge mit einem LC-Display bekannt, bei dem zwischen einem LC-Display und einer Leiterplatte ein Abstandshalter angeordnet ist. Der Abstandshalter weist Verbindungselemente auf, so dass eine Befestigung sowohl des LC-Displays an dem Abstandshalter als auch eine Befestigung dieser beiden Komponenten an der Leiterplatte ermöglicht wird. Bei der bekannten Anzeigeeinrichtung sind die Lichtquellen für die rückwärtige Beleuchtung des LC-Displays unmittelbar an der Leiterplatte positioniert, wobei der Abstandshalter mit einer ebenen transparenten Fläche zwischen den Lichtquellen einerseits und dem LC-Display andererseits angeordnet ist. Hierdurch wird die Lichtausbeute der Lichtquellen für die Hintergrundbeleuchtung beschränkt.

Aus der DE 42 36 353 C2 ist eine Anzeigeeinrichtung bekannt, bei der die Lichtquelle auf einer dem LC-Display zugewandten Seite der Leiterplatte angeordnet ist. Diese bekannte Anzeigeeinrichtung weist jedoch keinen Reflektor auf, sondern einen Lichtleiter. Ferner sind zusätzliche Verbindungselemente erforderlich, die die Bauteile der bekannten Anzeigeeinrichtung zusammenhalten.

Der Erfindung liegt die Aufgabe zugrunde, eine Anzeigeeinrichtung derart auszubilden, daß sie einen kompakten Aufbau mit geringer Bautiefe aufweist sowie einfach und kostengünstig herstellbar ist.

Zur Lösung der Aufgabe weist die Erfindung die Merkmale des Patentanspruchs 1 auf.

Der mit der Erfindung erzielte wesentliche Vorteil besteht darin, daß der Reflektor zusätzlich als Abstandshalter ausgebildet ist. Dem Reflektor kommt daher neben der Funktion, das von den Lichtquellen abgestrahlte Licht in Richtung des LC-Displays zu reflektieren, darüber hinaus die Funktion zu, einen vorgegebenen Abstand zwischen dem LC-Display und der Leiterplatte zu gewährleisten. Weiterhin weist der Reflektor Verbindungselemente auf, mittels derer der Reflektor bezüglich der Leiterplatte lagefest fixiert ist. Dadurch, daß der Reflektor mehrere Funktionen übernimmt, weist die Anzeigeeinrichtung einen einfachen und kompakten Aufbau auf, mit dem eine relativ geringe Bautiefe verwirklicht werden kann.

Nach einer Ausgestaltung der Erfindung weist der Reflektor einen schlitzförmigen Durchbruch auf, so daß Kontaktelemente der Lichtquellen mit Leiterbahnen der Leiterplatte elektrisch verbunden werden können. Die Lichtquellen sind dabei reihenförmig und in einem durchbruchnahen Bereich angeordnet, so daß die Kontaktelemente eine relativ kurze Längserstreckung aufweisen. Weiterhin wird eine sichere Lage der Lichtquellen bezüglich der Leiterplatte gewährleistet, bevor die Kontaktelemente mit den Leiterbahnen verlötet werden.

Nach einer Weiterbildung der Erfindung weist der Reflektor eine ausladende Ausbuchtung auf, durch die Kontaktelemente des LC-Displays steckbar sind zur elektrischen Verbindung mit Leiterbahnen auf der Leiterplatte. Diese Ausbuchtung ermöglicht eine vorgegebene Ausrichtung des LC-Displays bezüglich der Leiterplatte. Auf diese Weise wird das LC-Display in einer vorgegebenen Lage gehalten, bevor eine endgültige Befestigung der Kontaktelemente an den Leiterbahnen der Leiterplatte durch Verlötung erfolgt.

Nach einer Weiterbildung der Erfindung sind die Verbindungselemente des Reflektors als Rastelemente ausgebildet und ermöglichen somit einen sicheren Sitz des Reflektors auf der Leiterplatte.

Weitere Vorteile der Erfindung ergeben sich aus den weiteren Unteransprüchen.

Zwei Ausführungsbeispiele der Erfindung werden nachfolgend anhand der Zeichnungen näher beschrieben.

Es zeigen:
- Figur 1: Eine Explosionsdarstellung einer Anzeigeeinrichtung nach einem ersten Ausführungsbeispiel,
- Figur 2: eine perspektivische Darstellung eines Reflektors nach einem zweiten Ausführungsbeispiel,
- Figur 3: eine perspektivische Darstellung des entlang seiner Längsachse um 180° gedrehten Reflektors nach Fig. 2 und
- Figur 4: eine Draufsicht auf den Reflektor nach dem zweiten Ausführungsbeispiel.

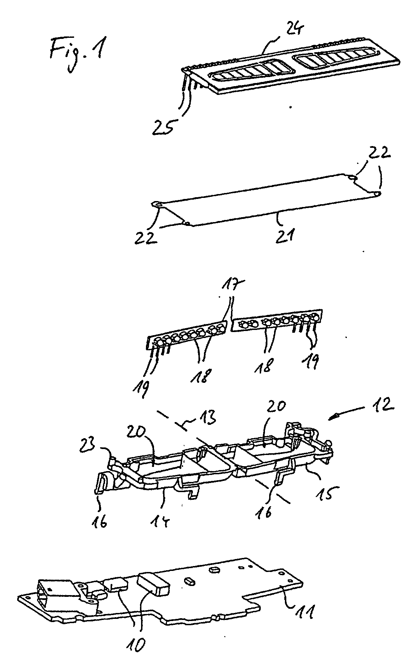

Nach einem ersten Ausführungsbeispiel gemäß Fig. 1 weist die Anzeigeeinrichtung eine mit elektrischen Bauelementen bestückte Leiterplatte 11 auf, auf die ein als Doppel-Reflektor 12 ausgebildeter Reflektor aufgesetzt wird. Der Doppel-Reflektor 12 besteht aus zwei spiegelsymmetrisch bezüglich einer gemeinsamen Verbindungslinie 13 angeordneten Reflektoren 14 und 15. Zur lösbaren Verbindung des Doppel-Reflektors 12 mit der Leiterplatte 11 weist der Doppel-Reflektor 12 an seinen Längskanten jeweils zwei Rastelemente 16 auf, die rastend an der Unterseite der Leiterplatte 11 einschnappen. Nachfolgend werden zwei jeweils auf einer Trägerplatte 17 angeordnete Reihen von Lichtquellen 18 mit ihren Kontaktelementen 19 jeweils durch einen schlitzförmigen Durchbruch 20 der Reflektoren 14 bzw. 15 durchgesteckt und dann in dafür vorgesehene, nicht dargestellte Öffnungen der Leiterplatte 11 eingesetzt. Nachfolgend wird eine mit einer Streufolie bedruckte Streuscheibe 21 auf den Doppel-Reflektor 12 gelegt. Die Streuscheibe 21 weist in ihren Eckbereichen Öffnungen 22 auf, die zu Halteelementen 23 des Doppel-Reflektors 12 korrespondieren, so daß die Streuscheibe 21 auf dem Doppel-Reflektor 12 fixiert ist und diesen vollständig nach oben hin abdeckt. Abschließend wird ein LC-Display 24 auf den Doppel-Reflektor 12 aufgesetzt, wobei Kontaktelemente 25 des LC-Displays 24 in dafür vorgesehene Öffnungen der Leiterplatte 11 eingreifen und mit auf derselben angeordneten Leiterbahnen verbunden sind. Der Doppel-Reflektor 12 dient als Abstandhalter, wobei er das LC-Display 24 in einem vorgegebenen Abstand zu der Leiterplatte 11 hält. Durch nachfolgende Verlötung der Kontaktelemente 19 und 25 mit den entsprechenden Leiterbahnen der Leiterplatte 11 ist die Montage der Anzeigeeinrichtung abgeschlossen. Sie kann nun in ein dafür vorgesehenes, nicht dargestelltes Anzeigegehäuse eingesetzt werden.

Ein zweites Ausführungsbeispiel der Anzeigeeinrichtung unterscheidet sich von dem ersten Ausführungsbeispiel darin, daß ihre Längserstreckung nur halb so groß gewählt ist. Dies bedeutet, daß sowohl das LC-Display 24, die Streuscheibe 21 und die Leiterplatte 11 die halbe Länge aufweisen. Zur Beleuchtung des LC-Displays wird lediglich eine mit Lichtquellen 18 bestückte Trägerplatte 17 verwendet.

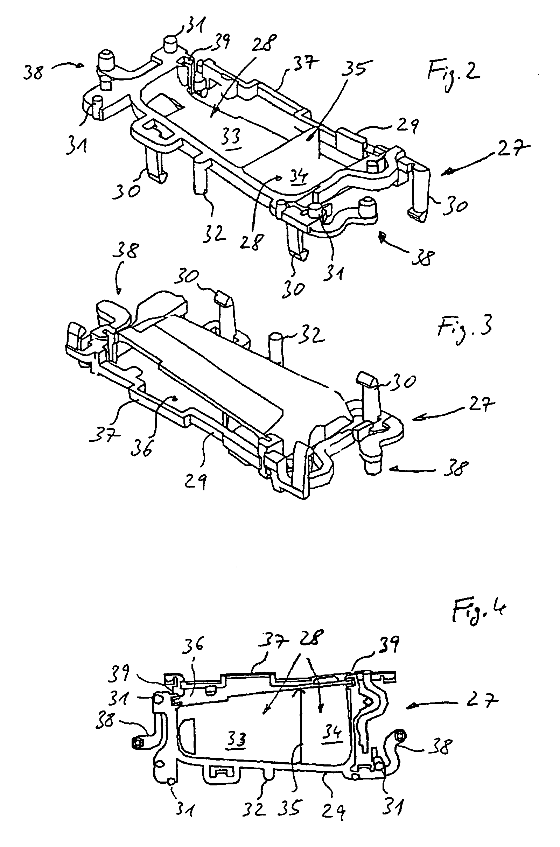

Die auf dieser Trägerplatte 17 reihenförmig angeordneten Lichtquellen 18 sind vorzugsweise als Leuchtdioden ausgebildet. Zur Reflexion der auf der einen Trägerplatte 17 angeordneten Lichtquellen 18 wird ein Reflektor 27 verwendet, der in den Figuren 2 bis 4 dargestellt ist.

Der Reflektor 27 besteht aus einer Reflektorfläche 28 und aus einem diese Reflektorfläche 28 umlaufenden Rahmen 29. Der Rahmen 29 weist jeweils an seinen Längskanten zwei Verbindungselemente als Rastelemente 30 auf, mit denen er durch Verrastung mit einer nicht dargestellten Leiterplatte verbunden ist. (Wie bereits beim ersten Ausführungsbeispiel beschrieben). In Eckbereichen des Rahmens 29 sind sich vertikal nach oben erstreckende Halteelemente 31 angeordnet, die zur Fixierung einer nicht gezeigten Streuscheibe dienen. In einem mittleren Bereich des Rahmens 29 sind vertikal nach unten abragende Nasen 32 angeformt, die sich mit ihren endseitigen Stirnflächen auf der Leiterplatte abstützen. Sie gewährleisten einen exakten vorgegebenen Abstand des auf den Reflektor 27 aufgesetzten LC-Displays zu der Leiterplatte.

Der Reflektor 27 besteht aus zwei Reflektorkammern 33 und 34, die durch einen Steg 35 getrennt sind. Die erste Reflektorkammer 33 ist einer ersten Teilstreufläche und die zweite Reflektorkammer 34 einer zweiten Teilstreufläche der darüber gelegten Streuscheibe zugeordnet. Durch Bedruckung der Teilstreuflächen mit farblich unterschiedlichen Streufolien werden die korrespondierenden Segmente des LC-Displays mit unterschiedlichen Farben beleuchtet. Es werden somit durch unterschiedlich gefärbte Teilflächen der Streuscheibe entsprechend gewünschte Farbeffekte erzielt. Je nach den Bedürfnissen kann die Anzahl der Stege 35 bzw. die Längserstreckung der Anzeigeeinrichtung erhöht werden, so daß mehrere Segmente des LC-Displays mit unterschiedlichen Farben beleuchtet werden.

Damit die Segmente des LC-Displays gleichmäßig beleuchtet werden, sind die Reflektorflächen wannenförmig ausgebildet. Ausgehend von den reihenförmig angeordneten Lichtquellen, deren Kontaktelemente durch einen schlitzförmigen Durchbruch 36 des Reflektors 27 gesteckt sind, steigt die Reflektorfläche 28 mit geringer Steigung in Richtung des LC-Displays an.

Erst in einem Endbereich nahe der gegenüberliegenden Längsseite des Rahmens 29 nimmt die Steigung zu, so daß die Reflektorfläche 28 im Querschnitt kreisbogenförmig in den Rahmen 29 übergeht. Die Enden des schlitzförmigen Durchbruchs 36 sind jeweils als Nut 39 ausgebildet, so daß die Trägerplatte mit den Lichtquellen lagerichtig gehalten ist. Auf einer Längsseite des Rahmens 29 weist dieser eine ausladende Ausbuchtung 37 auf, die ein Durchstecken der Kontaktelemente des LC-Displays innerhalb des Rahmens 29 ermöglicht. Auf diese Weise wird auch das LC-Display vor der endgültigen Verbindung durch Verlötung fixiert, wobei ein Herausfallen des LC-Displays aus der Leiterplatte verhindert wird.

Weiterhin weist der Reflektor 27 an den Schmalseiten des Rahmens 29 ausladende Fingerelemente 38 auf, die in vertikaler Richtung federnd ausgebildet sind. Sie dienen zur Fixierung der Anzeigeeinrichtung innerhalb eines nicht dargestellten Anzeigegehäuses. Der Reflektor 27 ist einstückig aus einem hell bzw. weiß gefärbten Kunstoffmaterial hergestellt. In Abhängigkeit von der Dimensionierung des LC-Displays ist der Reflektor 27 mit zu dem LC-Display korrespondierenden Reflektorflächen ausgebildet.

## Patentansprüche

1. Anzeigeeinrichtung für Kraftfahrzeuge mit einem LC-Display, mit mindestens zwei Lichtquellen (18) zur rückwärtigen Beleuchtung des LC-Displays (24), wobei das LC-Display (24) und die Lichtquellen (18) mit einer gemeinsamen Leiterplatte (11) elektrisch verbunden sind, wobei zwischen der Leiterplatte (11) und dem LC-Display (24) ein Abstandshalter angeordnet ist zur Festlegung eines vorgegebenen Abstandes zwischen dem LC-Display (24) und der Leiterplatte (11), wobei der Abstandshalter Verbindungselemente (16,30) aufweist zur Befestigung desselben an der Leiterplatte, **dadurch gekennzeichnet, dass** der Abstandshalter als Reflektor (14, 15, 27) ausgebildet ist mit einer wannenförmigen Reflektorfläche (28) und einem schlitzförmigen Durchbruch (20, 36), durch den lediglich die Kontaktelemente (19) der Lichtquellen (18) durchgesteckt und mit der Leiterplatte (11) verbunden sind.

2. Anzeigeeinrichtung nach Anspruch 1, **dadurch gekennzeichnet, dass** der Reflektor (14, 15, 27) einen umlaufenden Rahmen (29) aufweist, wobei dem Rahmen (29) der Abstandshalter und/oder die Verbindungselemente zugeordnet sind.

3. Anzeigeeinrichtung nach Anspruch 1 oder 2, **dadurch gekennzeichnet, dass** der Abstandshalter als eine an mindestens einer Längs- und/oder Querseite des Rahmens (29) angeformte Nase (32) ausgebildet ist, die sich in Richtung der Leiterplatte (11) erstreckt.

4. Anzeigeeinrichtung nach einem oder mehreren der Ansprüche 1 bis 3, **dadurch gekennzeichnet, dass** die Verbindungselemente als Rastelemente (16, 30) ausgebildet sind, derart, dass der Reflektor (14, 15, 27) durch Verrastung mit der Leiterplatte (11) verbunden ist.

5. Anzeigeeinrichtung nach Anspruch 4, **dadurch gekennzeichnet, daß** an den Längsseiten des Rahmens (29) jeweils mindestens zwei Rastelemente (30) angeordnet sind zur rastenden Verbindung mit der Leiterplatte (11).

6. Anzeigeeinrichtung nach einem oder mehreren der Ansprüche 2 bis 5, **dadurch gekennzeichnet, daß** der Rahmen (29) mehrere Halteelemente (23, 31) aufweist zur Fixierung einer Streuscheibe (21), wobei sich die Halteelemente (23, 31) in Richtung des LC-Displays (24) erstrecken und in Öffnungen (22) der Streuscheibe (21) eingreifen.

7. Anzeigeeinrichtung nach einem oder mehreren der Ansprüche 1 bis 6, **dadurch gekennzeichnet, daß** der Reflektor (14, 15, 27) einen quer verlaufenden Steg (35) aufweist zur Ausbildung zweier Reflektorkammem (33, 34), wobei die erste Reflektorkammer (33) einer Teilstreufläche der Streuscheibe (21) mit einer ersten Farbe und die zweite Reflektorkammer (34) einer Teilstreufläche der Streuscheibe (21) mit einer zweiten Farbe zugeordnet ist.

8. Anzeigeeinrichtung nach 7, **dadurch gekennzeichnet, dass** sich der schlitzförmige Durchbruch (20, 36) in einem spitzen Winkel zu einer Längsseite des Reflektors (14, 15, 27) erstreckt.

9. Anzeigeeinrichtung nach einem oder mehreren der Ansprüche 1 bis 8, **dadurch gekennzeichnet, dass** die Lichtquellen (18) reihenförmig auf einer Trägerplatte (17) angeordnet sind, wobei die Schmalseiten der Trägerplatte (17) jeweils in einer den schlitzförmigen Durchbruch (20, 36) begrenzenden Nut (39) des Reflektors (14, 15, 27) gehalten sind.

10. Anzeigeeinrichtung nach einem oder mehreren der Ansprüche 1 bis 9, **dadurch gekennzeichnet, dass** die Lichtquellen (18) jeweils als Leuchtdioden (LED) ausgebildet sind.

11. Anzeigeeinrichtung nach einem oder mehreren der Ansprüche 1 bis 10, **dadurch gekennzeichnet, daß** der Reflektor (14, 15, 27) im Querschnitt wannenförmig ausgebildet ist, derart, daß das von den Lichtquellen (18) ausgestrahlte Licht in Richtung des LC-Displays (24) umgelenkt wird.

12. Anzeigeeinrichtung nach einem oder mehreren der Ansprüche 1 bis 11, **dadurch gekennzeichnet, daß** der Reflektor (14, 15, 27) an der den Lichtquellen (18) zugewandten Längsseite eine ausladende Ausbuchtung (27) aufweist, durch die Kontaktelemente (25) des LC-Displays (24) durchsteckbar sind.

13. Anzeigeeinrichtung nach einem oder mehreren der Ansprüche 1 bis 12, **dadurch gekennzeichnet, daß** der Reflektor (14, 15, 27) an seinen Schmalseiten ausladende Fingerelemente (38) aufweist, die federnd ausgebildet sind zur Fixierung der Anzeigeeinrichtung innerhalb eines Anzeigegehäuses.

14. Anzeigeeinrichtung nach einem oder mehreren der Ansprüche 1 bis 13, **dadurch gekennzeichnet, daß** der Reflektor als Doppel-Reflektor (12) mit zwei an einer gemeinsamen Schmalseite verbundenen Reflektoren (14, 15) ausgebildet ist, wobei sich die Reflektoren (14, 15) symmetrisch bezüglich der gemeinsamen Schmalseite erstrecken.

15. Anzeigeeinrichtung nach einem oder mehreren der Ansprüche 1 bis 14, **dadurch gekennzeichnet, daß** der Reflektor (12, 27) einstückig ausgebildet ist und aus Kunststoff besteht.

16. Anzeigeeinrichtung nach einem oder mehreren der Ansprüche 1 bis 15, **dadurch gekennzeichnet, daß** die Leiterplatte (11) beidseitig mit elektronischen Bauelementen (10) bestückt ist.

## Claims

1. A display device for motor vehicles having an LC display and at least two light sources (18) for back-lighting of the LC display (24), the LC display (24) and the light sources (18) being electrically connected to a common printed circuit board (11) and a spacer being disposed between the printed circuit board (11) and the LC display (24) for establishing a given distance between the LC display (24) and the printed circuit board (11), the spacer having connecting elements (16, 30) for fixing same to the printed circuit board, **characterized in that** the spacer takes the form of a reflector (14, 15, 27) having a troughlike reflector surface (28) and a slot-shaped opening (20, 36), through which only the contact elements (19) of the light sources (18) are inserted and connected to the printed circuit board (11).

2. A display device according to Claim 1, **characterized in that** the reflector (14, 15, 27) has a peripheral frame (29), the spacer and/or the connecting elements being associated with said frame (29).

3. A display device according to Claim 1 or 2, **characterized in that** the spacer takes the form of a projection (32) formed on at least one longitudinal and/or transverse side of the frame (29), said projection (32) extending towards the printed circuit board (11).

4. A display device according to one or more of Claims 1 to 3, **characterized in that** the connecting elements take the form of snap-in locking elements (16, 30), so that the reflector (14, 15, 27) is connected by snap-in means to the printed circuit board (11).

5. A display device according to Claim 4, **characterized in that** at least two snap-in locking elements (30) are disposed on each longitudinal side of the frame (29) for snap-in connection to the printed circuit board (11).

6. A display device according to one or more of Claims 2 to 5, **characterized in that** the frame (29) has a plurality of retaining elements (23, 31) for fixing a diffusing plate (21), the retaining elements (23, 31) extending towards the LC display (24) and engaging in openings (22) in the diffusing plate (21).

7. A display device according to one or more of Claims 1 to 6, **characterized in that** the reflector (14, 15, 27) has a transverse web or crosspiece (35) for forming two reflector chambers (33, 34), the first reflector chamber (33) being associated with a partial diffusing surface of the diffusing plate (21) with a first colour, and the second reflector chamber (34) being associated with a partial diffusing surface of the diffusing plate (21) with a second colour.

8. A display device according to Claim 7, **characterized in that** the slot-shaped opening (20, 36) extends at an acute angle to a longitudinal side of the reflector (14, 15, 27).

9. A display device according to one or more of Claims 1 to 8, **characterized in that** the light sources (18) are disposed in a row on a carrier plate (17), the narrow sides of the carrier plate (17) each being held in a groove (39) of the reflector (14, 15, 27), said grooves (39) marking the limits of the slot-shaped opening (20, 36).

10. A display device according to one or more of Claims 1 to 9, **characterized in that** the light sources (18) take the form of light diodes (LED).

11. A display device according to one or more of Claims 1 to 10, **characterized in that** the reflector (14, 15, 27) is troughlike in cross-section so that the light emitted by the light sources (18) is deflected towards the LC display (24).

12. A display device according to one or more of Claims I to 11, **characterized in that** the reflector (14, 15, 27) has a wide projection (37) on the longitudinal side facing the light sources (18), through which contact elements (25) of the LC display (24) can be inserted.

13. A display device according to one or more of Claims 1 to 12, **characterized in that** on its narrow sides the reflector (14,15, 27) has protruding finger elements (38) which have a springy structure for fixing the display device inside a display housing.

14. A display device according to one or more of Claims 1 to 13, **characterized in that** the reflector takes the form of a double reflector (12) having two reflectors (14, 15) joined to a common narrow edge, the reflectors (14, 15) extending symmetrically in relation to the common narrow edge.

15. A display device according to one or more of Claims 1 to 14, **characterized in that** the reflector (12, 27) is made in one piece out of plastic.

16. A display device according to one or more of Claims 1 to 15, **characterized in that** the printed circuit board (11) is fitted on both sides with electronic components (10).

## Revendications

1. Dispositif d'affichage pour véhicules équipé d'un affichage à cristaux liquides, avec au moins deux sources lumineuses (18) en vue de l'éclairement par l'arrière de l'affichage à cristaux liquides (24, l'affichage à cristaux liquides (24) et les sources lumineuses (18) étant reliés électriquement à une plaquette commune de circuit imprimé (11), un élément d'écartement étant disposé entre la plaquette de circuit imprimé (11) et l'affichage à cristaux liquides (24) en vue de la fixation d'un écart prédéterminé entre l'affichage à cristaux liquides (24) et la plaquette de circuit imprimé (11), l'élément d'écartement présentant des éléments de liaison (16, 30), en vue de la fixation de celui-ci à la plaquette de circuit imprimé, **caractérisé en ce que** l'élément d'écartement est réalisé en tant que réflecteur (14, 15, 27) avec une surface réfléchissante (28) en forme de cuve et une découpe en forme de fente (20, 36) à travers laquelle sont enfichés les éléments de contact (19) de sources lumineuses (18) et sont reliés à la plaquette de circuit imprimé (11).

2. Dispositif d'affichage selon la revendication 1, **caractérisé en ce que** le réflecteur (14, 15, 27) présente un cadre périphérique (29), au cadre (29) étant associés l'élément d'écartement et/ou les éléments de liaison.

3. Dispositif d'affichage selon la revendication 1 ou 2, **caractérisé en ce que** l'élément d'écartement est réalisé sous la forme d'un bec (32) réalisé sur au moins un côté longitudinal et/ou transversal du cadre (29), qui s'étend en direction de la plaquette de circuit imprimé (11).

4. Dispositif d'affichage selon une ou plusieurs des revendications 1 à 3, **caractérisé en ce que** les éléments de liaison sont réalisés en tant qu'éléments d'arrêt (16, 30), de telle sorte que le réflecteur (14, 15, 27) soit relié par encliquetage avec la plaquette de circuit imprimé (11).

5. Dispositif d'affichage selon la revendication 4, **caractérisé en ce que** sur les côtés longitudinaux du cadre (29) sont disposés au moins deux éléments d'arrêt (30) en vue de la liaison par encliquetage avec la plaquette de circuit imprimé (11).

6. Dispositif d'affichage selon une ou plusieurs des revendications 2 à 5, **caractérisé en ce que** le cadre (29) présente plusieurs éléments de retenue (23, 31) en vue de la fixation d'un disque de diffusion (21), les éléments de retenue (23, 31) s'étendant en direction de l'affichage à cristaux liquides (24) et pénétrant dans des ouvertures (22) du disque de diffusion (21).

7. Dispositif d'affichage selon une ou plusieurs des revendications 1 à 6, **caractérisé en ce que** le réflecteur (14, 15, 27) présente une arête (35) s'étendant transversalement en vue de la formation de deux chambres de réflexion (33, 34), la première chambre de réflexion (33) étant associée à une surface de diffusion partielle du disque de diffusion (21) avec une première couleur et la seconde chambre réfléchissante (34) étant associée à une surface de diffusion partielle du disque de diffusion (21) avec une seconde couleur.

8. Dispositif d'affichage selon la revendication 7, **caractérisé en ce que** la découpe (20, 36) en forme de fente s'étend selon un angle aigu par rapport à un côté longitudinal du réflecteur (14, 15, 27).

9. Dispositif d'affichage selon une ou plusieurs des revendications 1 à 8, **caractérisé en ce que** les sources lumineuses (18) sont disposées en rangées sur une plaque support (17), les petits côtés de la plaque support (17) étant maintenus dans une gorge (39) limitant la découpe en forme de fente (20, 36) du réflecteur (14, 15, 37).

10. Dispositif d'affichage selon une ou plusieurs des revendications 1 à 9, **caractérisé en ce que** les sources lumineuses (18) sont réalisées en tant que diodes électroluminescentes (LED).

11. Dispositif d'affichage selon une ou plusieurs des revendications 1 à 10, **caractérisé en ce que** le réflecteur (14, 15, 27) est réalisé en forme de cuve en coupe, de telle sorte que la lumière rayonnée par les sources lumineuses (18) soit déviée en direction de l'affichage à cristaux liquides (24).

12. Dispositif d'affichage selon une ou plusieurs des revendications 1 à 11, **caractérisé en ce que** le réflecteur (14, 15, 27) présente une courbure saillante (27) sur le côté longitudinal tourné vers les sources lumineuses (18), à travers laquelle peuvent être enfichés des éléments de contact (25) de l'affichage à cristaux liquides (24).

13. Dispositif d'affichage selon une ou plusieurs des revendications 1 à 12, **caractérisé en ce que** le réflecteur (14, 15, 27) présente sur ses petits côtés des doigts saillants (38), réalisés élastiquement en vue de la fixation du dispositif d'affichage à l'intérieur d'un boîtier d'affichage.

14. Dispositif d'affichage selon une ou plusieurs des revendications 1 à 13, **caractérisé en ce que** le réflecteur est réalisé en tant que réflecteur double (12) avec deux réflecteurs (14, 15) reliés à un petit côté commun, les réflecteurs (14, 15) s'étendant symétriquement par rapport au petit côté commun.

15. Dispositif d'affichage selon une ou plusieurs des revendications 1 à 14, **caractérisé en ce que** le réflecteur (12, 27) est réalisé d'une seule pièce et en matière plastique.

16. Dispositif d'affichage selon une ou plusieurs des revendications 1 à 15, **caractérisé en ce que** la plaquette de circuit imprimé (11) est garnie des deux côtés avec des composants électroniques (10).
